# EUROPEAN PATENT SPECIFICATION

(11) **EP 4 255 076 B1**
(45) Date of publication and mention of the grant of the patent: **08.07.2026**
(21) Application number: 23163604.4
(22) Date of filing: 23.03.2023
(51) Int. Cl.: H04W 72/20, H04W 24/10, H04L 43/08, H04L 5/00, H04L 43/06, H04L 43/16, H04L 43/20, H04W 24/08

(54) **PERFORMANCE METRICS FORMAT ADAPTATION**
LEISTUNGSMETRIKEN FORMATANPASSUNG
ADAPTATION DE FORMAT DES MESURES DE PERFORMANCE

(30) Priority: 28.03.2022 IN 202211017909
(43) Date of publication of application: 04.10.2023
(73) Proprietor: Nokia Technologies Oy, 02610 Espoo (FI)
(72) Inventor: Andrianov, Anatoly, Schaumburg, 60173 (US); Swaminathan, Sivaramakrishnan, 560016 Bangalore (IN); Allwang, Christiane Maria, 80335 Munich (DE)
(74) Representative: Page White Farrer

(56) References cited:
- EP-A1- 2 137 859
- US-A1- 2012 110 460
- US-A1- 2016 044 077

## Description

### Field

Various examples described herein generally relate to apparatus, methods, and computer programs, and more particularly (but not exclusively) to apparatus, methods and computer programs for network apparatuses.

### Background

In general, a communication system can be seen as a facility that enables communication sessions between two or more entities such as user terminals, access nodes and/or other nodes by providing carriers between the various entities involved in the communications path. A communication system can be provided, for example, by means of a communication network and one or more compatible communication devices. The communication sessions may comprise, for example, communication of data for carrying communications such as voice, electronic mail (email), text message, multimedia and/or content data and so on. Content may be multicast or uni-cast to communication devices.

A user can access the communication system by means of an appropriate communication device or terminal. A communication device of a user is often referred to as user equipment (UE) or user device. The communication device may access a carrier provided by an access node and transmit and/or receive communications on the carrier.

The communication system and associated devices typically operate in accordance with a required standard or specification which sets out what the various entities associated with the system are permitted to do and how that should be achieved. Communication protocols and/or parameters which shall be used for the connection are also typically defined. One example of a communications system is UTRAN (3G radio). Another example of an architecture is the long-term evolution (LTE) or the Universal Mobile Telecommunications System (UMTS) radio-access technology. Another example communication system is so called 5G system that allows user equipment (UE) or user device to contact a 5G core via e.g. new radio (NR) access technology or via other access technology such as Untrusted access to 5GC or wireline access technology.

There is a need to provide control systems which enable a communications service provider (CSP) to control and optimise a complex network of communications system elements.

One of current approaches being employed is closed-loop automation and machine learning which can be built into self-organizing networks (SON) enabling an operator to automatically optimize every cell in the radio access network.

European patent application publication number EP 2157859 A1 relates to providing channel state feedback from a UE to a base station as a first, detailed or a second, less detailed type of channel state feedback information. Initially it is determined whether the UE has received an uplink grant from the base station or not. If the UE has received an uplink grant, a first type of channel state feedback information is transmitted to the base station on the granted resource. If, however, the UE has not received an uplink grant, a second type of channel state feedback information is transmitted to the base station. Different types of channel state feedback information enables a UE and an associated base station to use available resources more efficiently, when requesting for and delivering channel state feedback information.

United States patent application publication number US 2016/044077 A1 relates to techniques and mechanisms for facilitating the transmission of a data stream to a networked storage system. According to various embodiments, a request to transfer the data stream to the networked storage system may be received at a data mover located at a client device. The data mover may be configured to transfer data to the networked storage system via two different communications protocol interfaces. The data stream may be transmitted to the networked storage system over a network via a first one of the interfaces when a first characteristic associated with the data stream meets a designated criterion.

United States patent application publication number US 2012/110460 A1 relates to methods and systems for monitoring performance in electronic networks are provided. In some embodiments, a system may comprise a data collection server, a processor, and a user interface. The data collection server may be in electronic communication with a switch disposed in an electronic network. The processor may receive data collected by the data collection server from the switch. The processor may convert the data into a first format including a plurality of performance metrics.

### Summary

The present invention is defined by the appended independent claims. Certain more specific aspects are defined by the dependent claims.

### Brief description of Figures

Some examples, will now be described, merely by way of illustration only, with reference to the accompanying drawings in which:
Figures 1A and 1B show a schematic representation of a 5G system;
Figure 2 shows a schematic representation of a network apparatus;
Figure 3 shows a schematic representation of a user equipment;
Figure 4 shows a schematic representation of a non-volatile memory medium storing instructions which when executed by a processor allow a processor to perform one or more of the steps of the methods of some examples;
Figure 5 shows a schematic representation of a network;
Figure 6 illustrates example protocol stacks;
Figure 7 illustrates network architecture;
Figure 8 illustrates example operations that may be performed by an apparatus described herein;
Figure 9 illustrates example network architecture;
Figure 10 illustrates example signalling that may be performed by example apparatus; and
Figures 11 and 12 are example flow charts illustrating operations that may be performed by example apparatus.

### Detailed description

In the following description of examples, certain aspects are explained with reference to mobile communication devices capable of communication via a wireless cellular system and mobile communication systems serving such mobile communication devices. For brevity and clarity, the following describes such aspects with reference to a 5G wireless communication system. However, it is understood that such aspects are not limited to 5G wireless communication systems, and may, for example, be applied to other wireless communication systems (for example, current 6G proposals).

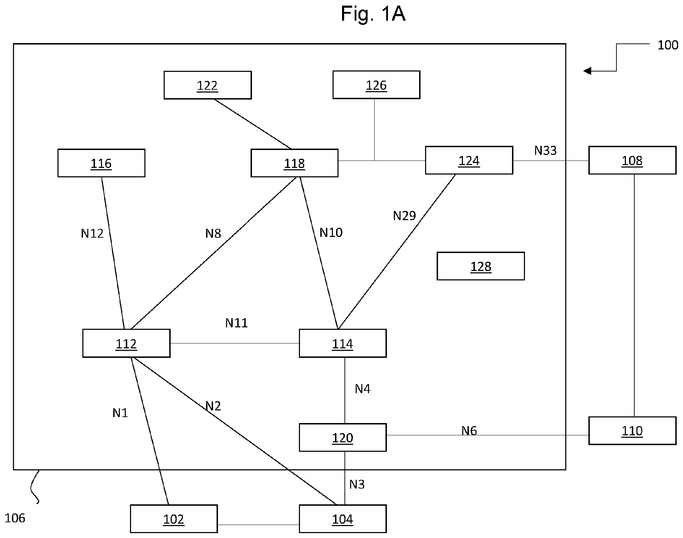

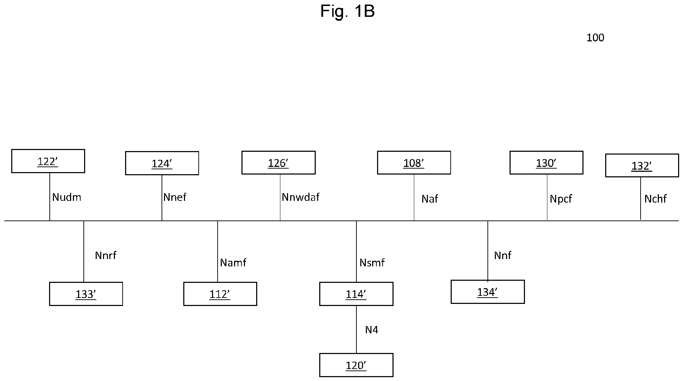

Before describing in detail the examples, certain general principles of a 5G wireless communication system are briefly explained with reference to Figures 1A and 1B.

Figure 1A shows a schematic representation of a 5G system (5GS) 100. The 5GS may comprise a user equipment (UE) 102 (which may also be referred to as a communication device or a terminal), a 5G access network (AN) (which may be a 5G Radio Access Network (RAN) or any other type of 5G AN such as a Non-3GPP Interworking Function (N3IWF) /a Trusted Non3GPP Gateway Function (TNGF) for Untrusted / Trusted Non-3GPP access or Wireline Access Gateway Function (W-AGF) for Wireline access) 104, a 5G core (5GC) 106, one or more application functions (AF) 108 and one or more data networks (DN) 110.

The 5G RAN may comprise one or more gNodeB (gNB) distributed unit functions connected to one or more gNodeB (gNB) unit functions. The RAN may comprise one or more access nodes.

The 5GC 106 may comprise one or more Access and Mobility Management Functions (AMF) 112, one or more Session Management Functions (SMF) 114, one or more authentication server functions (AUSF) 116, one or more unified data management (UDM) functions 118, one or more user plane functions (UPF) 120, one or more unified data repository (UDR) functions 122, one or more network repository functions (NRF) 128, and/or one or more network exposure functions (NEF) 124. The role of an NEF is to provide secure exposure of network services (e.g. voice, data connectivity, charging, subscriber data, and so forth) towards a 3rd party. Although NRF 128 is not depicted with its interfaces, it is understood that this is for clarity reasons and that NRF 128 may have a plurality of interfaces with other network functions.

The 5GC 106 also comprises a network data analytics function (NWDAF) 126. The NWDAF is responsible for providing network analytics information upon request from one or more network functions or apparatus within the network. Network functions can also subscribe to the NWDAF 126 to receive information therefrom. Accordingly, the NWDAF 126 is also configured to receive and store network information from one or more network functions or apparatus within the network. The data collection by the NWDAF 126 may be performed based on at least one subscription to the events provided by the at least one network function.

The network may further comprise a management data analytics service (MDAS) producer or MDAS Management Service (MnS) producer. The MDAS MnS producer may provide data analytics in the management plane considering parameters including, for example, load level and/or resource utilization. For example, the MDAS MnS producer for a network function (NF) may collect the NF's load-related performance data, e.g., resource usage status of the NF. The analysis of the collected data may provide forecast of resource usage information in a predefined future time window. This analysis may also recommend appropriate actions e.g., scaling of resources, admission control, load balancing of traffic, and so forth.

Figure 1B shows a schematic representation of a 5GC represented in current 3GPP specifications. It is understood that this architecture is intended to illustrate potential components that may be comprised in a core network, and the presently described principles are not limited to core networks comprising only the described components.

Figure 1B shows a 5GC 106' comprising a UPF 120' connected to an SMF 114' over an N4 interface. The SMF 114' is connected to each of a UDM 122', an NEF 124', an NWDAF 126', an AF 108', a Policy Control Function (PCF) 130', an AMF 112', and a Charging function 132' over an interconnect medium that also connects these network functions to each other. The 5G core 106' further comprises a network repository function (NRF) 133' and a network function 134' that connect to the interconnect medium.

3GPP refers to a group of organizations that develop and release different standardized communication protocols. 3GPP develops and publishes documents pertaining to a system of "Releases" (e.g., Release 15, Release 16, and beyond).

Current communication specifications consider the provision of at least one service from a management service (MnS) producer to an MnS consumer. Any network function (NF) or management function (MF) may be configured to function in the role of an MnS producer to an MnS consumer. 3GPP Release 16 specifications for Management entities enable MnS consumers to manage performance metric production and reporting jobs on MnS producers. This allows MnS consumers to obtain desired metrics from network nodes or network node groups of interest. Performance metrics can be reported with a file-based or stream-based approach.

File-based reporting relates to collecting a relatively large amount of data for reporting in a single instance at the end of the collection. In contrast, stream-based reporting relates to reporting that large amount of data in smaller increments and throughout the period of time during which the collection is performed. In other words, a main difference between the two approaches is in the buffering of data: In a file-based approach, relatively large buffers are filled prior to making the data available to the consumer, with the data in the relatively large buffers being transmitted at predetermined intervals. In a streaming-based approach, the buffering is optional (left to the implementor's decision), with the data being reported immediately upon availability. Relatively small buffering is possible in the streaming-based model, but streaming reporting does not introduce a large delay in data availability as data is made available while it is still relevant.

File-based Performance Measurement reporting is prone to delay. For example, in many cases, the data comprised in the file is outdated by the time the file data has reached an intended receiver (MnS Consumer). This poses challenges for performing analytics on the received Performance Measurements, and/or for performing fault management activities from the data reported in the file.

In contrast, streaming services enable MnS producers to send Performance Measurement data to the MnS consumers in near real time, which may ensure timely delivery. Such streaming-based reporting may ensure that the data is delivered to the intended recipient while the data is still relevant. 3GPP release 16 (3GPP TS 28.532 Section 11.5 currently defines examples of data that may be streamed. These examples include at least trace data and Performance Measurement data. MnS consumers may use this near real time data for analytics (e.g., for Management Data Analytics Service (MDAS)) and/or for fault management activities (e.g., activities that identify and/or rectify faults in a network). Streamed-based reporting may thus help a system to perform closed loop optimization at a faster rate and to apply the corrective actions on the MnS producer based on the analytics results from MnS consumer.

Streaming of performance-related data may be provided by a Streaming Data Reporting MnS. This MnS has been generalized to support streaming of multiple data types, such as, for example, Performance Measurements, Key Performance Indicators (KPIs), trace, analytics, and proprietary data. The Streaming Data Reporting MnS thus enables the near-real-time delivery of large volumes of data.

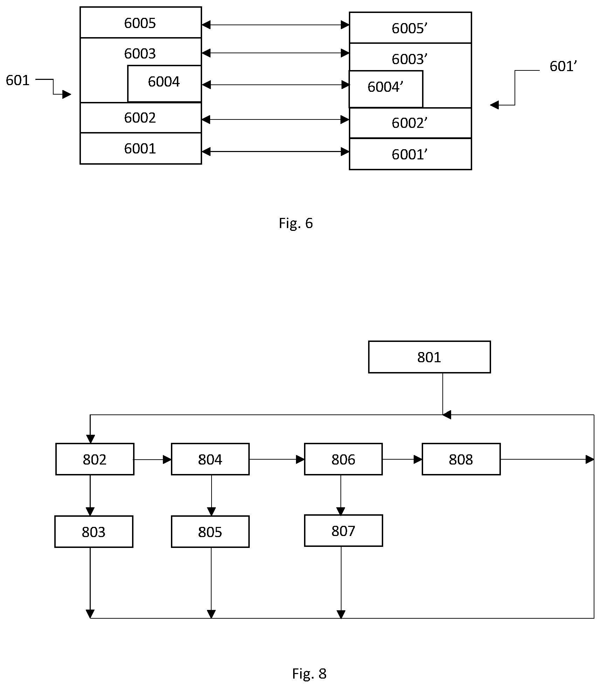

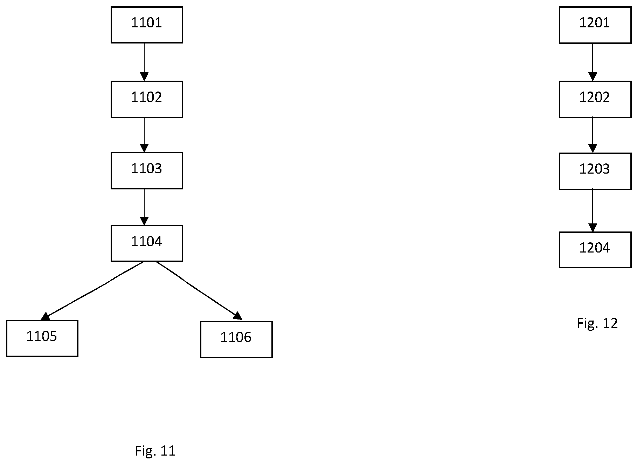

The protocol stack with streaming performance data payloads is formatted as per Figure 12.5.1.1.4-2 of 3GPP TS 28.532. This is illustrated with respect to Figure 6. Streaming performance data payload may be formatted as per Annex G of TS 28.550.

Figure 6 illustrates two protocol stacks, 601, 601'. A first protocol stack 601 comprises an Internet Protocol (IP) layer 6001 located under a Transport Control Protocol (TCP) layer 6002. The Transport Control Protocol layer 6002 is located beneath a WebSocket layer 6003 comprising a secure WebSocket 6004 (e.g., Transport Layer Security (TLS) encryption). The WebSocket layer 6003 is located below a 3GPP TS 28.550 layer 6005.

A second protocol stack 601' comprises an Internet Protocol (IP) layer 6001' located under a Transport Control Protocol (TCP) layer 6002'. The Transport Control Protocol layer 6002' is located beneath a WebSocket layer 6003' comprising a secure WebSocket 6004'(e.g., Transport Layer Security (TLS) encryption). The WebSocket layer 6003' is located below a 3GPP TS 28.550 layer 6005'. Arrows between the first and second protocol stacks illustrate levels at which those layers communicate.

Figure 6 illustrates how protocol stacks at different entities may communicate with each other, with the communications being carried by WebSocket binary data frames. Under this performance measurement streaming is achieved by Performance Data Stream Units as Payload data of WebSocket Data frame. The type of WebSocket Data frame is binary. 3GPP Release 16 is currently defined to allow two formats/interface languages for serialization of streaming data, Google Protocol Buffers (GPB) and Abstract Syntax Notation One (ASN.1). GPB and ASN.1 are serialization formats that are currently explicitly supported by 3GPP data streaming. ASN.1 is defined normatively in Annex G of 3GPP TS 28.550. This specification currently defines that static frame structures are sent in each streaming burst. This means that the same amount of data is streamed.

In order to support the diverse intended use cases of the networks of 5G and beyond, it is useful to configure network systems to be more agile, cost effective and storage effective than in previous networks. The amount of data that is expected to be generated from network systems of 5G and beyond is likely to become larger with increasing numbers of data sources as network functions are decomposed into smaller cloud native components, cells become smaller, an increasing number of cells, etc.

Further, the area of analytics has significantly improved over the last decade, empowering systems with cutting edge algorithms for various predictions and statistical inferences to be deployed in a network. To leverage the cutting-edge algorithms, it is therefore useful to have the data used with those algorithms to be delivered in a timely manner in order to achieve optimal results. While the amount of data generated from the NEs in 5G and beyond is likely to grow exponentially in a short time frame, the communication channels available are not growing at the same pace.

Further, the available communication channels are allocated according to a predetermined priority. For example, communication channel resources are first to mission critical activities (for example, military or natural calamities information, information sharing of national interest etc), then to revenue generating purposes (such as, for example, to voice and data traffic), before being allocated for Operations and Management (O&M) related activities. This is despite O&M related activities often resulting in a more efficient use of network resources. Therefore, it becomes more important to utilize available channel capacity efficiently and in an optimized manner for O&M related activities in order to render the network more efficient overall.

3GPP TS 28.552 defines performance measurements, and 3GPP TS 28.554 defines Key Performance Indicators (KPIs) with sub-counters (e.g., measurements are provided relative to a pre-defined measurement area, such as, for example, per slice, per Quality of Service of flow, etc.) that are reported as a collection/array of integers.

Formal definition of performance measurements for 5G are currently defined in 3GPP TS 28.552, while Key Performance Indicators for 5G are currently defined in 3GPP TS 28.554.

While the primary focus of the following is discussed in terms of 5G performance measurements and KPIs, the present disclosure may be applicable to other types of data reporting, such as, for example, Enhanced-UTRAN performance measurements specified in 3GPP TS 32.425, Enhanced Packet Core performance measurements defined in 3GPP TS 32.426 etc.

It is understood that, for brevity, the following largely discusses examples in the context of streaming of performance measurements. However, it is understood that these examples may be used for streaming KPIs. The term "performance metrics" may also be used as a generic term that comprises both performance measurements and KPIs in 5G and in other communication networks.

Concrete examples are performance measurements defined in network entities such as, for example, AMF, SMF, UPF, non-3GPP Inter-Working Function (N3IWF) and Short Message Service Function (SMSF), which are reported at a slice level (i.e. per slice identifier, e.g., per Single Network Slice Selection Assistance Information (S-NSSAI)). Reporting a single counter results in reporting several integers. This means that even with relatively small number of counters, the amount of data (due to sub-counters) reported for each interval may be large. In cases of slowly changing or non-changing measurement values, the reporting with static frame structures is inefficient (creates redundancies).

As an example, a counter is one standardized performance measurement (standardized in TS 28.552), with the counter corresponding to a single "variable". This variable may comprise a single value or an array of values (with the values comprised in an array being referred to herein as sub-counters). The values/sub-counters may be reported separately per slice identifier or per Quality of Service, etc. Therefore, reporting one counter or one performance measurement may result in reporting several values (i.e., respective values in respect of each sub-counter associated with a counter).

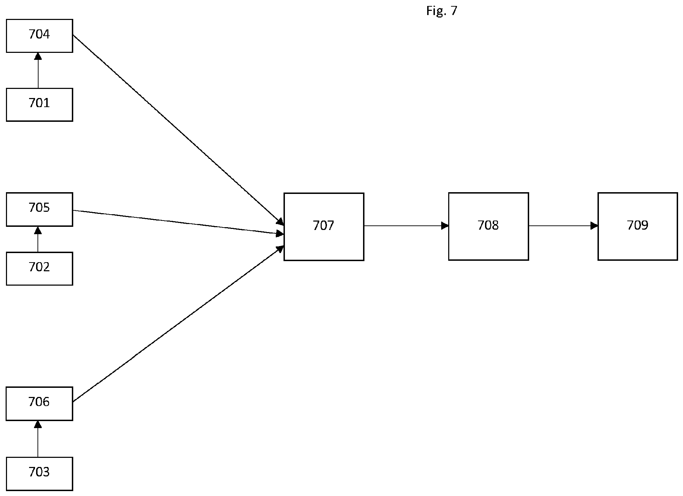

Figure 7 illustrates one mechanism for streaming performance management data.

Figure 7 illustrates a first access point/gNB 701, a second access point/gNB 702 and an nth access point/gNB 703. Each of the first to nth access points 701-703 provide performance management and/or KPI data to respective distributed Self-Optimising Network (D-SON) components 704-706 (although it is noted that these D-SON components may be embodied by equivalent functionality in, for example, a radio intelligent controller (RIC) or equivalent).

Each of the D-SON components 704-706 is configured to stream performance management data to an NMS 707 using a static frame structure. The NMS 707 provides the received streamed data to a centralized Self-Optimising Network (C-SON) 708, which in turns provides the streamed data to a centralized analytics service 709 (e.g., big data centers) for processing.

In the example of Figure 7, static data frames are sent for all the streamed performance measurement counters irrespective of whether the streamed performance measurement is slow changing or fast changing or no change.

The present application identifies that the amount of performance measurement data is increasing with increasing numbers of network elements and as the streaming of performance measurement data provides timely delivery of data for performing effective optimization. At the same time, communication channel infrastructure is limited over which the huge amount of generated data must be shared.

The present application further identifies that the use of static structure for all the performance measurements, counters do not provide an optimum reporting mechanism. Hence there is a clear need for efficient and optimal use of the communication channel to reduce the amount of data streamed over the network with minimum loss of information.

The following proposes a method and apparatus for efficiently streaming data related to performance measurement counters by optimizing the amount of data transmitted while also minimizing information lost. In particular, the following proposes using an adaptive structure for reporting performance measurements for streaming instead of the static structures currently defined in 3GPP TS 28.550.

In principle, not all the performance measurements are changing at the same rate over time. Hence it is not needed to use the full structure to share a slow changing performance measurement value. Therefore, slowly changing performance measurement values may be represented by a delta value that indicates a difference between a previously reported value and a current value of a performance measurement. Delta values may use less space for transmission compared to the previously reported value.

Throughout the following, the concepts of "key frame" and "abbreviated frame" are used to respectively represent an absolute value of a performance measurement, and a relative value of a later performance measurement with respect to an earlier performance measurement (i.e., a delta value).

The concept of the "key frame" with respect to the streaming of performance measurements may be defined as a Performance Data Stream Units (PDSU), where all the performance measurements in that PDSU are streamed as it has been measured by the MnS producer. In other words, the key frame may comprise values as defined in 3GPP TS 28.552 and TS 28.554 for the corresponding performance measurement/KPI.

In contrast, the concept of an "abbreviated frame" with respect to the streaming of performance measurements may be defined as those frames that carry a delta value of the corresponding performance measurement from a previously reported frame, which may be a key frame or an abbreviated frame. Which frame is to be used as a "previously reported frame" may be agreed by the MnS consumer and MnS producer prior to or when the abbreviated frame is transmitted.

It may be that an abbreviated frame comprises a plurality of values respectively indicating values of respective performance measurements. However, it is understood that not every value in the abbreviated frame is represented by a delta/difference value. In particular, an abbreviated frame may comprise at least one performance measurement value represented in an absolute form (e.g., as in a key frame) in addition to at least one other performance measurement value comprising a delta value. In other words, an abbreviated frame format implies that a size reduction method has been applied to at least one performance measurement value comprised in the said abbreviated frame. In other words, the frame has to be de-abbreviated prior to consumption by a data consumer unaware of the abbreviation technique.

The following discusses these concepts in the context of an encoder (herein referred to as a Streaming performance measurement (PM) Abbreviation Encoder (SPAE)) and a decoder (herein referred to as a Streaming performance management Abbreviation Decoder (SPAD)).

The SPAE may produce abbreviated streaming performance measurement bursts to achieve adaptive serialized streaming of performance measurements. In this context, producing abbreviated streaming performance measurement bursts means that the SPAE may be configured to transmit a burst comprising at least one abbreviated frame.

The SPAD may receive the transmitted abbreviated burst(s) and de-abbreviate the at least one abbreviated frame comprised therein. A SPAD may de-abbreviate the at least one abbreviated frame by converting it into the format of a key frame. In other words, a SPAD may be configured to convert received abbreviated frames into a legacy/full format specified in an operating communication protocol (e.g., 3GPP TS 28.550, TS 28.554, and TS 28.552).

The SPAE may provide the SPAD with a first key frame for use by the SPAD in converting an abbreviated frame received by the SPAD into the format of a key frame (i.e., for use by the SPAD in de-abbreviating a received abbreviated frame). The SPAE may be configured to identify at least one performance measurement that is considered to be slowly changing. A performance measurement may be considered to be slowly changing if its absolute value varies by less than a corresponding threshold value within a predetermined time period. The predetermined time period may be a reporting period for that performance measurement. The SPAE may be configured to subsequently format those performance measurements which are identified by the SPAE as being slowly changing as abbreviated frames for transmission to the SPAD. The SPAE may be configured to signal an indication of "no change" for those performance measurements that have not changed. The SPAE may be configured to transmit respective key frames for reporting performance measurements that are not identified as being as slowly changing. In other words, the SPAE may be configured to identify fast changing performance measurements by identifying those performance measurements whose absolute value exceeds their corresponding threshold value within a predetermined time period, and to format those performance measurement reports as key frames for transmission to the SPAD.

It is understood that those performance measurements identified as slowly moving may further be periodically formatted for transmission as key frames, where this periodical formatting occurs over a longer time duration than the above mentioned predetermined time period. This periodical formatting may improve the method robustness against loss of information in unreliable communication channels.

The method performed by the SPAE is illustrated with respect to the example flow chart of Figure 8, which illustrates a mechanism applied in respect of a performance measurement.

At 801, the SPAE sends a first key frame for the performance measurement to a SPAD. This first key frame may indicate a first absolute value for the performance measurement.

At 802, the SPAE determines if a first time has expired since the first key frame was transmitted at 801. This may be determined by initiating a timer at 801, wherein the timer has a value corresponding to the first time.

When it is determined at 802 that the first time has expired, the SPAE proceeds to 803. At 803, the SPAE sends a second key frame for the performance measurement. The second key frame may comprise a second absolute value for the performance measurement. The SPAE may further re-initiate the timer such that the timer restarts counting down from the first value. After 803, the SPAE returns to 802.

When it is determined at 802 that the first time has not expired, the SPAE proceeds to 804.

At 804, the SPAE determines whether a current absolute value of the performance measurement is different from the absolute value of the performance measurement signalled in the first (and/or second) key frame.

When it is determined at 804 that the current absolute value of the performance measurement has not changed, the SPAE proceeds to 805. At 805, the SPAE signals to the SPAD an indication that the performance measurement is unchanged. After 805, the SPAE proceeds to 802.

When it is determined at 804 that the current absolute value of the performance measurement has changed, the SPAE proceeds to 806.

At 806, the SPAE determines whether the current absolute value is different from the absolute value comprised in the first (and/or second) key frame by more than a threshold amount. The threshold amount may be unique to that specific performance measurement. The threshold amount may be common to multiple performance measurements. The threshold amount may be represented by an absolute value. The threshold amount may be dependent on the absolute value comprised in the first (and/or second) key frame (e.g., the threshold amount may be represented as a percentage of the absolute value comprised in the first (and/or second) key frame).

When it is determined at 806 that the current absolute value differs by less than the threshold amount, the SPAE proceeds to 807.

At 807, the SPAE indicates the current absolute value to the SPAD using an abbreviated frame format. In other words, at 807 the SPAE signals a first abbreviated frame to the SPAD, where the first abbreviated frame comprises a value reflecting a difference between the current absolute value and the absolute value comprised in the first and/or second key frame. After 807, the SPAE returns to 802. The value reflecting a difference can only be converted into the current absolute value by using an absolute value comprised in the first and/or second key frame. When it is determined at 806 that the current absolute value does not differ by less than the threshold amount, the SPAE proceeds to 808.

At 808, the SPAE sends a third key frame for the performance measurement. The third key frame may comprise a third absolute value for the performance measurement. In other words, when the SPAE determines that the performance measurement is quickly changing, a key frame may be sent (i.e., it may be deemed inappropriate to send an abbreviated frame at the present time). After 808, the SPAE returns to 802.

For illustrative purposes, the following provides some example systems in which the presently described principles may be implemented. Although the described SPAE and SPAD may be implemented in any appropriate transmitter and respective receiver, the following illustrates examples in which the SPAE and SPAD are respectively hosted in a producer of streaming performance measurements management services and a consumer of streaming performance measurements management services.

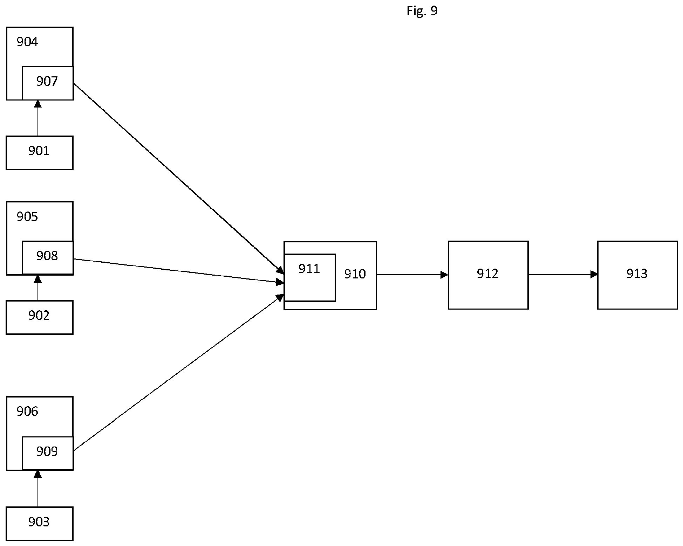

This example architecture is illustrated with respect to Figure 9.

Figure 9 illustrates a first access point/gNB 901, a second access point/gNB 902 and an nth access point/gNB 903. Each of the first to nth access points 901-903 provide performance management and/or KPI data to respective distributed Self-Optimising Network (D-SON) components 904-906 (although it is noted that these D-SON components may be embodied by equivalent functionality in, for example, a radio intelligent controller (RIC) or equivalent).

Each of the D-SON components 904-906 comprises a respective SPAE 907-909. The respective SPAEs are configured to stream performance management data to an NMS 910 using both a static frame structure (e.g., key frames) and an adaptive frame structure (e.g., abbreviated frames). The NMS 910 comprises a SPAD 911 for converting received abbreviated frames into a key frame format. The NMS 910 provides the received streamed data to a centralized Self-Optimising Network (C-SON) 912 using key frame structures/formats (i.e., not using abbreviated frame formats). The C-SON 912 provides the key frames it has received to a centralized analytics service 913 (e.g., big data centers) for processing.

The sequence of performance data streaming, starting from initiating the measurement collection (which may be performed in response to a specific job request, or in response to a general configuration), to sending the performance data to the performance data streaming consumer (stream target) may be as specified in 3GPP TS 28.550. The presently described system may be applied in the context of reporting performance measurements in respect of existing schemes for initiating those measurement collection procedures. In other words, the measurement collection may be initiated via any of a plurality of different mechanisms.

As mentioned above, the presently described techniques are described in terms of an encoder (SPAE) and in respect of a corresponding decoder (SPAD). These entities will be discussed in turn.

The SPAE may be responsible for adaptive the formatting of at least one reported performance measurements and/or KPIs. Adaptive formatting for reporting is achieved by utilizing two kinds of frame structures, a "key" frame and an "abbreviated"/delta frame structure.

The adaptive frame structure may be designed to carry an indication representing the type of the frame structure (this indication may be labelled as, e.g. "abbreviatedPdsulndicator"). The frame structure indication may be used to indicate whether the current frame is a "key frame" or an "abbreviated frame". In other words, the frame structure indication comprised in any one frame may be configured to take one of two possible values, with one value indicating that the frame is a key frame, and the other value indicating that the frame is an abbreviated frame.

The data carried in an abbreviated frame may be encoded in at least one of the following ways.

In case of small changes of the performance measurement value (e.g., less than the above-mentioned threshold), a difference between the current performance measurement value and a previously reported performance measurement value may be comprised in a measurement report reporting the change. The data type used for reporting the difference may be smaller than the data type used for reporting the previously reported performance measurement value (eg: "short" instead of "integer", which may result in a transmission size of 2 bytes for "short" instead of 4 bytes for "integer").

The difference between the current value and the previously reported value of a performance measurement in abbreviated frame can be computed with reference to a previously reported performance measurement value. For example, the different/delta may relate to a difference between the current performance measurement value and a performance measurement value comprised in the last key frame transmitted prior to the transmission of the delta/difference. As another example, the difference/delta may relate to a difference between the current performance measurement value and the corresponding performance measurement value reported in the frame transmitted in the reporting transmission made immediately prior to the transmission of the current performance measurement value, irrespective of the type of value and/or frame type. As another example, the difference/delta may relate to a difference between the current performance measurement value and a corresponding performance measurement value reported in the previously transmitted reporting frame, irrespective of the type of value and/or frame type. In this later case, the transmission of the current performance measurement value may further identify the previously transmitted measurement reporting frame.

In case of fast changes of the performance measurement value (i.e., where a current performance measurement value exceeds a threshold value), the value comprised in the associated measurement report may be an absolute value (i.e., unabbreviated), meaning that no other performance value is needed for determining the current performance measurement value from value comprised in the measurement report.

When there is no change of the performance measurement value, the SPAE may signal an indication that there is no change of the performance measurement value relative to a previously reported value. This indication of no change may be unaccompanied by a value representing either the above-mentioned difference and/or the above-mentioned unabbreviated value. The indication for indicating "no change" may be as short as single bit. The above-mentioned difference value and/or the above-mentioned unabbreviated value may be accompanied by an indication that a change is being reported. This indication that a change is being reported may be represented by a single bit.

As discussed above, the SPAE may perform a series of operations.

For example, one a connection is established for providing performance measurement information, the first performance measurement reporting frame transmitted may be a first key frame. Performance Measurement reporting frames transmitted subsequent to the transmission of the first key fame by the SPAE may be "key frames" and/or "abbreviated frames".

After the first "key frame" is generated, another "key frame" may be generated again when at least one of the following conditions is fulfilled.

As a first condition, the another key frame may be generated and transmitted when a pre-configured timer expires (such as the timer discussed above with reference to the first time. This first time may be related to a minimum reporting frequency at which performance measurements are to be provided by the SPAE.

As a second condition, the another key frame may be generated and transmitted when the amount of fast changing performance measurements exceeds a pre-configured threshold, as discussed above. Exceeding the pre-configured threshold may indicate that the frame size reduction is not worth the extra computation effort spent on abbreviating the frame. This may be the case when, for example, all of the performance measurements are fast changing, and/or most of the performance measurements are fast changing (i.e. at least 50% of more of the performance measurement values are fast changing).

After the first key frame is generated, an abbreviated frame may be generated when an opportunity to reduce the size of reported data is detected/identified by the SPAE. For example, when there are substantial number of slowly changing and/or non-changing performance measurement counters/values that are being reported in a particular frame. In such a case, the amount of compute effort (e.g., compute the delta/difference value, replace the original value with computed delta; detect no change and replace the original value with "no change indicator" in the reporting frame) may be worth the size reduction.

The transmitted performance measurement reports may be received by a decoder (e.g., a SPAD). The SPAD may be caused to decode the adaptively serialized performance measurements and output performance measurements in a full form (i.e., in an absolute form instead of in a received relative form).

The SPAD may therefore be caused to evaluate received frames in order to determine their type (i.e., "abbreviated" or "key"). This may be performed by inspecting a received performance measurement reporting frame for the presence of an indicator indicating that the received frame is an abbreviated frame.

When it is determined that the received frame is a "key frame", a copy of all the performance measurement values comprised in that key frame may be stored locally at the SPAD. The locally stored values may be used for de-abbreviating later received abbreviated frames. Further, performance measurement values comprised in the key frame may be passed to an MnS producer with no processing on those performance measurement values being performed by the SPAD.

When it is determined that the received frame is an "abbreviated frame", then the actual value of each performance measurement may be derived as follows.

First, when a "no change indicator" is detected in the abbreviated frame, then the MnS producer is provided with values of the performance measurements previously stored locally at the SPAD.

Second, when the SPAD determines that the received frame comprises delta values for performance measurements, then absolute values for those performance measurements may be obtained by combining the delta values with their respective performance measurement values stored locally in the SPAD. In other words, the frame may be de-abbreviated by adding the reported value to the previously stored value.

After de-abbreviating at least one (and, in an example, all) of the performance measurement values comprised in the received abbreviated frame, the SPAD forms a "reconstructed frame" that is formatted like a key frame, and that comprises the performance measurement values determined by the de-abbreviating process. The reconstructed frame may be passed to the MnS producer by the SPAD.

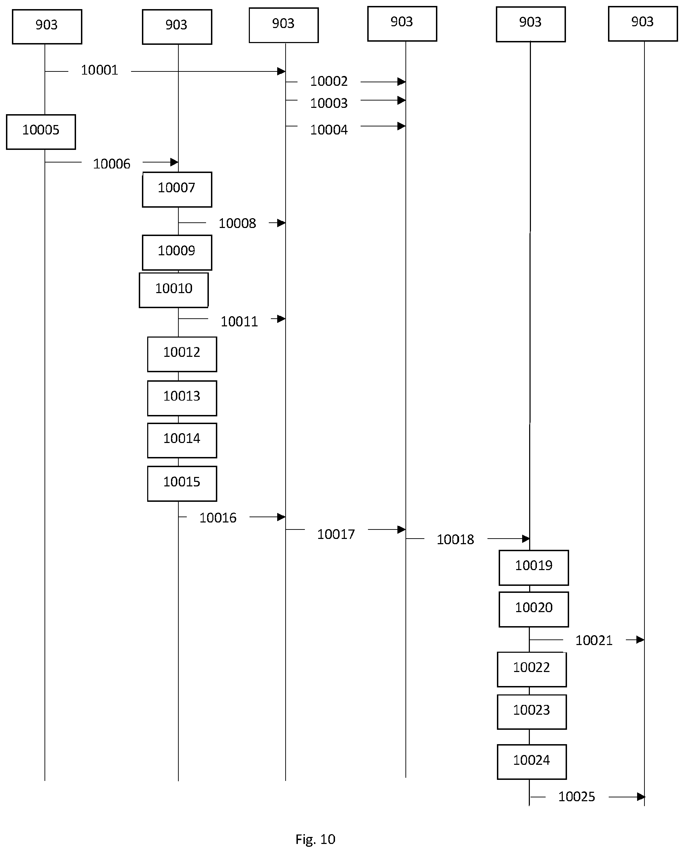

Figure 10 shows a message sequence chart illustrating one example flow of messages for setting up a streaming connection, collecting measurements, and adaptive reporting of those measurements.

Figure 10 illustrates signalling that may be performed by a measurement producer 1001, a SPAE 1002, a producer of MnS for performance data streaming 1003, a consumer of MnS for performance data streaming 1004, a SPAD 1005, and a measurement consumer 1006.

Steps 10001 to 10004 relate to the establishment of a streaming connection for streaming measurement data.

At 10001, the measurement producer 1001 signals the MnS producer 1003 to set up streaming of new performance measurement measurements.

At 10002, the MnS producer 1003 signals the MnS consumer 1004 to establish a streaming connection. This may be performed using an "establishStreamingConnection" operation when no streaming connection exists between the MnS producer and the MnS consumer. This may be as described in 3GPP TS 28.532.

Instead of performing 10002 (which is performed when there is no streaming connection currently established and/or active streaming connection between the MnS producer and the MnS consumer), the MnS producer may instead perform 10003 and/or 10004.

At 10003, the MnS producer 1003 signals the MnS consumer 1004 to add new stream information to the existing stream. This may be achieved using, for example, the "addStreamInfo()" operation defined in 3GPP TS 28.532.

At 10004, the MnS producer 1003 signals the MnS consumer 1004 to update the existing stream(s). This may be useful in the event that there are any updates needed on the existing streams. This may be performed using the "updateStreamInfo()" operation described in 3GPP TS 28.532.

It is understood that this is merely an example, and that the subsequently described steps may be performed with a streaming being established in some other way.

10005 to 10025 may be executed in a loop while the measurement collection is active (i.e., while the measurement collection is being performed).

At 10005, the measurement producer 1001 collects performance measurements. The performance measurements may be collected according to a performance measurement configuration provided to the measurement producer 1001 (e.g., from the MnS producer 1003).

At 10006, the measurement producer 1001 provides performance measurements collected to the SPAE 1002.The SPAE may evaluate the time duration between receipt of the provided performance measurements and a previously transmitted key frame with respect to a predetermined threshold, and perform at least action in response to the evaluation. These are illustrated in the following steps.

As a first example, 10007 to 10008 relate to steps that may be performed when the measurements received at 10006 are received at a time after the transmittal of the last key frame that exceeds the threshold, and/or that may be performed when there are no previous key frame transmissions.

At 10007, the SPAE 1002 stores the reported values for all performance measurements in the form in which they're received from the measurement producer 1001.

At 10008, the SPAE 1002 signals the performance measurement values stored at 10007 to the MnS producer 1003. This may be signalled as using a key frame format. Subsequent to this, later evaluations made at 10006 may be made with respect to the time of transmittal of the key frame of 10008. After 10008, the method proceeds to 10017.

As a second example, 10009 to 10014 relate to examples in which the time period between the transmittal of the last key frame and the time of receipt of the performance measurements in 10006 did not exceed the threshold.

At 10009, the SPAE 1002 evaluates the received measurements to determine a nature of encoding to be performed for transmitting the performance measurements to the MnS producer 1003. As part of this evaluation, the SPAE may determine whether the received measurements are fast changing or slow changing, as described above.

When 10009 determines that the performance measurements are fast changing, the SPAE performs 10010 to 10011.

At 10010, the values of all the performance measurements are stored by the SPAE for all performance measurements in the form in which they're received from the measurement producer 1001. In other words, the SPAE 1002 stores the received measurements in a key frame format.

At 10011, the SPAE 1002 signals the stored values of 10010 to MnS producer 1003 for performance measurement data streaming. This may be signalled as using a key frame format.

10012 to 10014 are operations that may be performed when 10009 determines that the performance measurements are slowly changing.

At 10012, a difference between a current value of a performance measurement metric and a locally stored key frame value for the same performance metric is computed at the SPAE 1002. The calculated difference may then be stored at the SPAE. In other words, the SPAE may store a calculated difference to replace an original performance measurement value. Storing the performance measurement data as a difference value reduces the amount of memory use to store the performance measurement data.

Storing the calculated difference may be useful for example implementations in which future calculations of a current performance metric are calculated with respect to a most recent performance metric value. However, it is understood that alternative examples are possible. For example, the calculation of a difference between a current value of a performance metric and a previous value of the performance metric may be made based on any previously stored value, provided the decoder knows which previously stored value to use. The previously stored value may refer to simply the last signalled value. As an alternative example, the previously stored value may refer to a value for that performance metric value comprised in the most recently signalled key frame. Therefore, the SPAE 1002 may be configured to maintain a previously signalled performance metric value for use as a reference value for that performance metric when later calculating a difference using a current performance metric value and the reference value. The reference value may be updated throughout operation. For example, the reference value may represent the mostly recently signalled value of that performance metric. As another example, the reference value may represent a value for that performance metric signalled in a most recently signalled key frame (or some other frame).

As a special case of 10012, when 10012 determines that there has been no change in the performance measurement value compared to the key frame value for that performance measurement value, the SPAE 1002 may perform 10013.

At 10013, the SPAE 1002 replaces the performance measurement value with a "no change" indicator. The size of the no change indicator may be smaller than the full value of the performance value metric. For example, the size of the no change indicator may be a single bit.

It is understood that an abbreviated frame may still be justified and/or signaled in the event of fast changing performance value measurement data. In this case, the SPAE performs 10014, in which the SPAE represents a particular performance metric value in an absolute form (such as in a key frame) despite the fact that a frame being transmitted is an abbreviated frame. In other words, different performance metric values within a same abbreviated frame may be represented/embodied therein in different forms (e.g., a first performance metric value may be represented in an absolute form while another performance metric value is represented in a relative/delta/difference form in a same abbreviated frame). The form in which a particular performance metric value is represented in a particular abbreviated frame may be determined in dependence on the degree of difference between a current value for that performance metric and a reference value for that performance metric locally stored at the SPAE. For example, fast changing performance metric values (i.e., a difference between a current value for that performance metric and a reference value for that performance metric exceeds a threshold amount) may be signalled in an absolute form, while slow changing performance metric values (i.e., a difference between a current value for that performance metric and a reference value for that performance metric is less than the threshold amount) may be signalled in a relative/difference form. The value of the threshold may be unique to and/or independent for that performance metric.

Regardless of whether the SPAE 1002 performs one of 10012 to 10014, the SPAE proceeds to 10015. At 10015, the SPAE 1002 encodes and prepares an abbreviated frame comprising at least one difference value in the abbreviated frame, wherein a difference value indicates a difference in value between a currently reported performance measurement value and a previously reported performance measurement value. The abbreviated frame may comprise an indication that it is an abbreviated frame. For example, the frame may comprise an "abbreviatedPdsulndicator" flag in the header of the frame. This flag may be set to TRUE when indicating that the frame could contain at least one abbreviated performance measurement value. This flag may be set to FALSE when indicating that the frame does not comprise at least one abbreviated performance measurement value.

At 10016, the SPAE 1002 signals the generated abbreviated frame of 10015 to MnS producer 1003 for performance measurement data streaming.

At 10017, the MnS producer reports the received stream data of 10016 and/or 10011 to the MnS consumer 1004 for performance measurement data streaming. This may be performed using the Application Programming Interface "reportStreamData" defined in 3GPP TS 28.532.

At 10018, the MnS Consumer may signal the received frame of 10017 to SPAD 1005.

At 10019, the SPAD may determine whether the received frame is a key frame or an abbreviated frame. This may be determined by inspecting the presence of "abbreviated frame" indicator to identify whether the received frame is a key frame or an abbreviated frame. However, it is understood that this may be determined in an alternative way, such as, for example, determining the length of the frame and comparing the length of the frame to an expected frame size for a key frame and/or for an abbreviated frame.

When it is determined at 10019 that the received frame is a key frame, the SPAD 1005 proceeds to 10020.

At 10020, the SPAD 1005 locally stores a copy of the performance measurement values comprised in the frame. These locally stored values may be used for later de-abbreviation of received abbreviated frames.

At 10021, the SPAD 1005 signals the received key frame to the measurement consumer 1006.

When it is determined at 10019 that the received frame is an abbreviated frame, the SPAD 10005 proceeds to 10022. 10022 to 10025 may be performed in respect of each performance measurement value comprised in the received abbreviated frame.

At 10022, the SPAD determines that a no change indicator is provided in the received abbreviated frame. The SPAD 1005 subsequently substitutes the no change indicator with the performance measurement locally stored at the SPAD 1005 from the last received key frame.

At 10023, the SPAD 1005 determines that there is no "no change" indicator comprised in the received abbreviated frame for the performance measurement metric being considered, and that the abbreviated frame instead comprises a delta value representing a difference between a current value of a performance measurement metric and a previously signalled value of that performance measurement metric. In this case, at 10023, the SPAD computes a current value of the performance measurement metric by combining the received delta value with the stored previously signalled value of that performance measurement metric.

At 10024, the SPAD 1005 determines that there is no "no change" indicator comprised in the received abbreviated from for the performance measurement metric being considered. In this case, the SPAD does not make any substitution for the received current value of the performance measurement metric. In other words, in this case, the received current value of the performance measurement metric is used in its received form.

At 10025, for all of the received performance measurement metrics that at least one of 10020 to 10024 has been performed for, the SPAD signals full values for the received performance measurement metrics to the measurement consumer 1006. In other words, the SPAD 1005 provides an unabbreviated performance measurement frame to the measurement consumer 1006.

The above mechanisms may be represented in 3GPP TS 28.550 by at least the following text. This text may indicate that the ASN.1 serialization update supporting adaptive streaming of performance measurement. The text highlighted in yellow are the additions proposed.

The serialization method provides the option to indicate a given frame as a "key frame" or an "abbreviated frame". In case of an "abbreviated frame", "no change indicator" is shared when the performance measurement has not changed during the latest reporting interval. When the performance measurement has changed but not much, delta change may be reported in the abbreviated frame.

Further, the ASN.1 definition may identify that the PDSU may comprise:

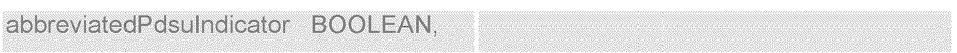

And that the "MeasValue ::=CHOICE" may comprise

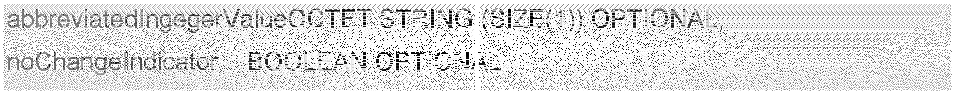

Figures 11 and 12 are flow charts illustrating aspects of the above-mentioned aspects. It is therefore understood that the following may be combined with at least one feature discussed above.

Figure 11 illustrates operations that may be performed by an apparatus for an encoder.

At 1101, the apparatus receives, in a first format, a first plurality of values respectively representing first values of performance metrics.

At 1102, the apparatus signals the first plurality of values to a network apparatus using the first format. The first format may comprise said first plurality of values in their absolute form. The first format may comprise all of said first plurality of values in their absolute form. In other words, the first format may be a key frame format.

At 1103, the apparatus may receive, in the first format, a second plurality of values respectively representing second values of the performance metrics.

At 1104, the apparatus determines whether at least a predetermined number of the second plurality of values are different to the first plurality of values.

When it is determined that at least the predetermined number of the second plurality of values are different, at 1105 the apparatus signals the second plurality of values to the network apparatus using the first format. The first format may comprise all of said first plurality of values in their absolute form.

When it is determined that less than the predetermined number of the second plurality of values are different, at 1106, the apparatus signals the second plurality of values to the network apparatus using a second format. The second format may comprise at least part of the second plurality of values in a relative (or delta) form. In other words, the second format may be an abbreviated frame format.

When it is determined that the second format is to be used for signalling, the second format may comprise, for at least one of the second values, an indication indicating that said second value is identical to a corresponding one of the first values. Said indication indicating that said second value is identical to a corresponding one of the first values may comprise a flag indicating that the second value is unchanged.

When it is determined that the second format is to be used for signalling, the second format may comprise, for at least one of the second values, an indication that the at least one of the second values is represented in the second format as a difference between the at least one of the second values and a corresponding one of the first values.

When it is determined that the second format is to be used for signalling, the second format may comprise, for at least one of the second values, the at least one second value.

The apparatus may further be caused to: determine whether, for at least one of the second values, the second value differs from a corresponding first value by at least a threshold; and when it is determined that the at least one second value differs from its corresponding first value by at least the threshold, causing the second value to be represented in the second format in an absolute form; and when it is determined that the at least one second value differs from its corresponding first value by less than the threshold, causing the second value to be represented in the second format as a difference between the second value and the corresponding first value.

When it is determined that the second format is to be used for signalling, the second format may comprise an indication that at least one of the second values is represented therein as a difference between the at least one of the second values and a corresponding one of the first values.

The apparatus may further be caused to locally storing the first plurality of values; and subsequently overwrite at least one of the first plurality of values using a corresponding one of the second plurality of values when it is determined that said corresponding one of the second plurality of values is to be used as a reference value for signalling at least one value of a third plurality of values that respectively representing third values of the performance metrics as a difference between said at least one value of the third plurality and the reference value.

The apparatus may further be caused to: receive, in the first format, the third plurality of values; determine whether at least the predetermined number of the third plurality of values are different to the second plurality of values; and when it is determined that at least the predetermined number of the third plurality of values are different, signalling the third plurality of values to the network apparatus using the first format; and when it is determined that less than the predetermined number of the third plurality of values are different, signalling the third plurality of values to the network apparatus using the second format.

Figure 12 illustrates operations that may be performed by an apparatus for a decoder. The decoder may be configured to receive the signalling mentioned above in respect of Figure 11.

At 1201, the apparatus receives, in a first format, a first plurality of values respectively representing first values of performance metrics.

At 1202, the apparatus receives, in the second format, a second plurality of values respectively representing second values of the performance metrics.

At 1203, the apparatus converts the received second plurality of values in the second format into the first format.

At 1204, the apparatus signals the second plurality of values in the first format to a service consumer.

The second format may comprise, for at least one of the second values, an indication indicating that said second value is identical to a corresponding one of the first values, and wherein said converting said second value into the first format may comprise using an absolute value of said corresponding first value to represent the second value in the first format.

The second format may comprise, for at least one of the second values, an indication that the at least one of the second values is represented in the second format as a difference between the at least one of the second values and a corresponding one of the first values, and wherein the converting said second value into the first format may comprise combining said difference and an absolute value of said corresponding first value to create an absolute second value for representing the second value in the first format.

The second format may comprise, for at least one of the second values, the at least one second value, and said converting said second value into the first format may comprise using said second value to represent the second value in the first format.

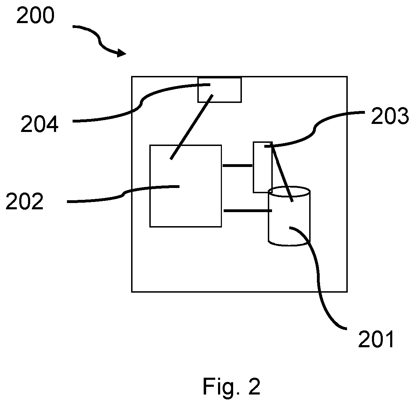

Figure 2 shows an example of a control apparatus for a communication system, for example to be coupled to and/or for controlling a station of an access system, such as a RAN node, e.g. a base station, gNB, a central unit of a cloud architecture or a node of a core network such as an MME or S-GW, a scheduling entity such as a spectrum management entity, or a server or host, for example an apparatus hosting an NRF, NWDAF, AMF, SMF, UDM/UDR, and so forth. The control apparatus may be integrated with or external to a node or module of a core network or RAN. In some examples, base stations comprise a separate control apparatus unit or module. In other examples, the control apparatus can be another network element, such as a radio network controller or a spectrum controller. The control apparatus 200 can be arranged to provide control on communications in the service area of the system. The apparatus 200 comprises at least one memory 201, at least one data processing unit 202, 203 and an input/output interface 204. Via the interface the control apparatus can be coupled to a receiver and a transmitter of the apparatus. The receiver and/or the transmitter may be implemented as a radio front end or a remote radio head. For example, the control apparatus 200 or processor 201 can be configured to execute an appropriate software code to provide the control functions.

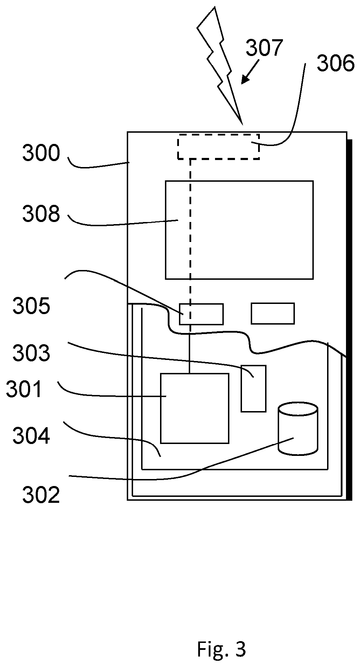

A possible wireless communication device will now be described in more detail with reference to Figure 3 showing a schematic, partially sectioned view of a communication device 300. Such a communication device is often referred to as user equipment (UE) or terminal. An appropriate mobile communication device may be provided by any device capable of sending and receiving radio signals. Non-limiting examples comprise a mobile station (MS) or mobile device such as a mobile phone or what is referred to as a 'smart phone', a computer provided with a wireless interface card or other wireless interface facility (e.g., USB dongle), personal data assistant (PDA) or a tablet provided with wireless communication capabilities, or any combinations of these or the like. A mobile communication device may provide, for example, communication of data for carrying communications such as voice, electronic mail (email), text message, multimedia and so on. Users may thus be offered and provided numerous services via their communication devices. Non-limiting examples of these services comprise two-way or multi-way calls, data communication or multimedia services or simply an access to a data communications network system, such as the Internet. Users may also be provided broadcast or multicast data. Non-limiting examples of the content comprise downloads, television and radio programs, videos, advertisements, various alerts and other information.

A wireless communication device may be for example a mobile device, that is, a device not fixed to a particular location, or it may be a stationary device. The wireless device may need human interaction for communication, or may not need human interaction for communication. As described herein, the terms UE or "user" are used to refer to any type of wireless communication device.

The wireless device 300 may receive signals over an air or radio interface 307 via appropriate apparatus for receiving and may transmit signals via appropriate apparatus for transmitting radio signals. In Figure 3, a transceiver apparatus is designated schematically by block 306. The transceiver apparatus 306 may be provided, for example, by means of a radio part and associated antenna arrangement. The antenna arrangement may be arranged internally or externally to the wireless device.

A wireless device is typically provided with at least one data processing entity 301, at least one memory 302 and other possible components 303 for use in software and hardware aided execution of tasks it is designed to perform, including control of access to and communications with access systems and other communication devices. The data processing, storage and other relevant control apparatus can be provided on an appropriate circuit board and/or in chipsets. This feature is denoted by reference 304. The user may control the operation of the wireless device by means of a suitable user interface such as keypad 305, voice commands, touch sensitive screen or pad, combinations thereof or the like. A display 308, a speaker and a microphone can be also provided. Furthermore, a wireless communication device may comprise appropriate connectors (either wired or' wireless) to other devices and/or for connecting external accessories, for example hands-free equipment, thereto.

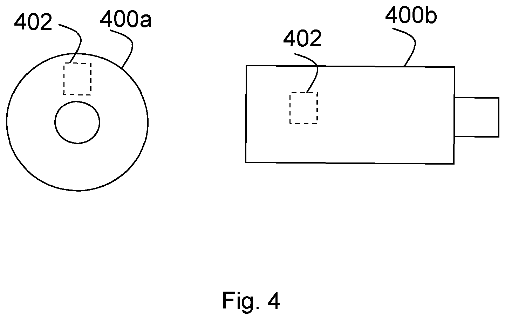

Figure 4 shows a schematic representation of non-volatile memory media 400a (e.g. computer disc (CD) or digital versatile disc (DVD)) and 400b (e.g. universal serial bus (USB) memory stick) storing instructions and/or parameters 402 which when executed by a processor allow the processor to perform one or more of the steps of the methods of Figure 11 and/or Figure 12, and/or methods otherwise described previously.

As provided herein, various aspects are described in the detailed description of examples and in the claims. In general, some examples may be implemented in hardware or special purpose circuits, software, logic or any combination thereof. For example, some aspects may be implemented in hardware, while other aspects may be implemented in firmware or software which may be executed by a controller, microprocessor or other computing device, although examples are not limited thereto. While various examples may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The examples may be implemented by computer software stored in a memory and executable by at least one data processor of the involved entities or by hardware, or by a combination of software and hardware. Further in this regard it should be noted that any procedures, e.g., as in Figure 11 and/or Figure 12, and/or otherwise described previously, may represent program steps, or interconnected logic circuits, blocks and functions, or a combination of program steps and logic circuits, blocks and functions. The software may be stored on such physical media as memory chips, or memory blocks implemented within the processor, magnetic media (such as hard disk or floppy disks), and optical media (such as for example DVD and the data variants thereof, CD, and so forth).

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs), application specific integrated circuits (ASIC), gate level circuits and processors based on multicore processor architecture, as nonlimiting examples.

Additionally or alternatively, some examples may be implemented using circuitry. The circuitry may be configured to perform one or more of the functions and/or method steps previously described. That circuitry may be provided in the base station and/or in the communications device and/or in a core network entity.

As used in this application, the term "circuitry" may refer to one or more or all of the following:
(a) hardware-only circuit implementations (such as implementations in only analogue and/or digital circuitry);
(b) combinations of hardware circuits and software, such as:
   (i) a combination of analogue and/or digital hardware circuit(s) with software/firmware and
   (ii) any portions of hardware processor(s) with software (including digital signal processor(s)), software, and memory(ies) that work together to cause an apparatus, such as the communications device or base station to perform the various functions previously described; and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example integrated device.

The foregoing description has provided by way of non-limiting examples a full and informative description of some examples. However, various modifications and adaptations may become apparent to those skilled in the relevant arts in view of the foregoing description, when read in conjunction with the accompanying drawings and the claims.

In the above, different examples are described using, as an example of an access architecture to which the described techniques may be applied, a radio access architecture based on long term evolution advanced (LTE Advanced, LTE-A) or new radio (NR, 5G), without restricting the examples to such an architecture, however. The examples may also be applied to other kinds of communications networks having suitable means by adjusting parameters and procedures appropriately. Some examples of other options for suitable systems are the universal mobile telecommunications system (UMTS) radio access network (UTRAN), wireless local area network (WLAN or WiFi), worldwide interoperability for microwave access (WiMAX), Bluetooth^{®}, personal communications services (PCS), ZigBee^{®}, wideband code division multiple access (WCDMA), systems using ultra-wideband (UWB) technology, sensor networks, mobile ad-hoc networks (MANETs) and Internet Protocol multimedia subsystems (IMS) or any combination thereof.

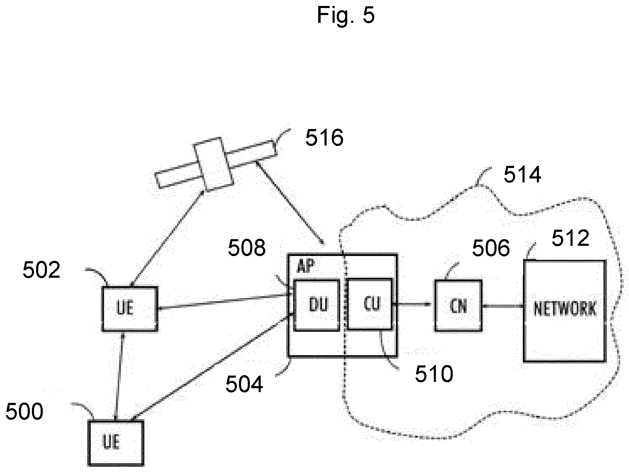

Figure 5 depicts examples of simplified system architectures only showing some elements and functional entities, all being logical units, whose implementation may differ from what is shown. The connections shown in Figure 5 are logical connections; the actual physical connections may be different. It is apparent to a person skilled in the art that the system typically comprises also other functions and structures than those shown in Figure 5.

The examples are not, however, restricted to the system given as an example but a person skilled in the art may apply the solution to other communication systems provided with necessary properties.

The example of Figure 5 shows a part of an exemplifying radio access network. For example, the radio access network may support sidelink communications described below in more detail.

Figure 5 shows devices 500 and 502. The devices 500 and 502 are configured to be in a wireless connection on one or more communication channels with a node 504. The node 504 is further connected to a core network 506. In one example, the node 504 may be an access node such as (e/g)NodeB serving devices in a cell. In one example, the node 504 may be a non-3GPP access node. The physical link from a device to a (e/g)NodeB is called uplink or reverse link and the physical link from the (e/g)NodeB to the device is called downlink or forward link. It should be appreciated that (e/g)NodeBs or their functionalities may be implemented by using any node, host, server or access point etc. entity suitable for such a usage.

A communications system typically comprises more than one (e/g)NodeB in which case the (e/g)NodeBs may also be configured to communicate with one another over links, wired or wireless, designed for the purpose. These links may be used for signalling purposes. The (e/g)NodeB is a computing device configured to control the radio resources of communication system it is coupled to. The NodeB may also be referred to as a base station, an access point or any other type of interfacing device including a relay station capable of operating in a wireless environment. The (e/g)NodeB includes or is coupled to transceivers. From the transceivers of the (e/g)NodeB, a connection is provided to an antenna unit that establishes bi-directional radio links to devices. The antenna unit may comprise a plurality of antennas or antenna elements. The (e/g)NodeB is further connected to the core network 506 (CN or next generation core NGC). Depending on the deployed technology, the (e/g)NodeB is connected to a serving and packet data network gateway (S-GW +P-GW) or user plane function (UPF), for routing and forwarding user data packets and for providing connectivity of devices to one or more external packet data networks, and to a mobile management entity (MME) or access mobility management function (AMF), for controlling access and mobility of the devices.

Examples of a device are a subscriber unit, a user device, a user equipment (UE), a user terminal, a terminal device, a mobile station, a mobile device, etc

The device typically refers to a mobile or static device (e.g. a portable or non-portable computing device) that includes wireless mobile communication devices operating with or without an universal subscriber identification module (USIM), including, but not limited to, the following types of devices: mobile phone, smartphone, personal digital assistant (PDA), handset, device using a wireless modem (alarm or measurement device, etc.), laptop and/or touch screen computer, tablet, game console, notebook, and multimedia device. It should be appreciated that a device may also be a nearly exclusive uplink only device, of which an example is a camera or video camera loading images or video clips to a network. A device may also be a device having capability to operate in Internet of Things (IoT) network which is a scenario in which objects are provided with the ability to transfer data over a network without requiring human-to-human or human-to-computer interaction, e.g. to be used in smart power grids and connected vehicles. The device may also utilise cloud. In some applications, a device may comprise a user portable device with radio parts (such as a watch, earphones or eyeglasses) and the computation is carried out in the cloud.

The device illustrates one type of an apparatus to which resources on the air interface are allocated and assigned, and thus any feature described herein with a device may be implemented with a corresponding apparatus, such as a relay node. An example of such a relay node is a layer 3 relay (self-backhauling relay) towards the base station. The device (or, in some examples, a layer 3 relay node) is configured to perform one or more of user equipment functionalities.

Various techniques described herein may also be applied to a cyber-physical system (CPS) (a system of collaborating computational elements controlling physical entities). CPS may enable the implementation and exploitation of massive amounts of interconnected information and communications technology, ICT, devices (sensors, actuators, processors microcontrollers, etc.) embedded in physical objects at different locations. Mobile cyber physical systems, in which the physical system in question has inherent mobility, are a subcategory of cyber-physical systems. Examples of mobile physical systems include mobile robotics and electronics transported by humans or animals.

Additionally, although the apparatuses have been depicted as single entities, different units, processors and/or memory units (not all shown in Figure 5) may be implemented.

5G enables using multiple input - multiple output (MIMO) antennas, many more base stations or nodes than the LTE (a so-called small cell concept), including macro sites operating in co-operation with smaller stations and employing a variety of radio technologies depending on service needs, use cases and/or spectrum available. 5G mobile communications supports a wide range of use cases and related applications including video streaming, augmented reality, different ways of data sharing and various forms of machine type applications (such as (massive) machine-type communications (mMTC), including vehicular safety, different sensors and real-time control). 5G is expected to have multiple radio interfaces, e.g. below 6GHz or above 24 GHz, cmWave and mmWave, and also being integrable with existing legacy radio access technologies, such as the LTE. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as below 6GHz - cmWave, 6 or above 24 GHz - cmWave and mmWave). One of the concepts considered to be used in 5G networks is network slicing in which multiple independent and dedicated virtual sub-networks (network instances) may be created within the same infrastructure to run services that have different requirements on latency, reliability, throughput and mobility.

The LTE network architecture is fully distributed in the radio and fully centralized in the core network. The low latency applications and services in 5G require to bring the content close to the radio which leads to local break out and multi-access edge computing (MEC). 5G enables analytics and knowledge generation to occur at the source of the data. This approach requires leveraging resources that may not be continuously connected to a network such as laptops, smartphones, tablets and sensors. MEC provides a distributed computing environment for application and service hosting. It also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications).

The communication system is also able to communicate with other networks 512, such as a public switched telephone network, or a VoIP network, or the Internet, or a private network, or utilize services provided by them. The communication network may also be able to support the usage of cloud services, for example at least part of core network operations may be carried out as a cloud service (this is depicted in Figure 5 by "cloud" 514). This may also be referred to as Edge computing when performed away from the core network. The communication system may also comprise a central control entity, or a like, providing facilities for networks of different operators to cooperate for example in spectrum sharing.

The technology of Edge computing may be brought into a radio access network (RAN) by utilizing network function virtualization (NFV) and software defined networking (SDN). Using the technology of edge cloud may mean access node operations to be carried out, at least partly, in a server, host or node operationally coupled to a remote radio head or base station comprising radio parts. It is also possible that node operations will be distributed among a plurality of servers, nodes or hosts. Application of cloudRAN architecture enables RAN real time functions being carried out at or close to a remote antenna site (in a distributed unit, DU 508) and non-real time functions being carried out in a centralized manner (in a centralized unit, CU 510).

It should also be understood that the distribution of labour between core network operations and base station operations may differ from that of the LTE or even be non-existent. Some other technology advancements probably to be used are Big Data and all-IP, which may change the way networks are being constructed and managed. 5G (or new radio, NR) networks are being designed to support multiple hierarchies, where Edge computing servers can be placed between the core and the base station or nodeB (gNB). One example of Edge computing is MEC, which is defined by the European Telecommunications Standards Institute. It should be appreciated that MEC (and other Edge computing protocols) can be applied in 4G networks as well.

5G may also utilize satellite communication to enhance or complement the coverage of 5G service, for example by providing backhauling. Possible use cases are providing service continuity for machine-to-machine (M2M) or Internet of Things (IoT) devices or for passengers on board of vehicles, Mobile Broadband, (MBB) or ensuring service availability for critical communications, and future railway/maritime/aeronautical communications. Satellite communication may utilise geostationary earth orbit (GEO) satellite systems, but also low earth orbit (LEO) satellite systems, in particular mega-constellations (systems in which hundreds of (nano)satellites are deployed). Each satellite in the mega-constellation may cover several satellite-enabled network entities that create on-ground cells. The on-ground cells may be created through an on-ground relay node or by a gNB located on-ground or in a satellite.

The depicted system is only an example of a part of a radio access system and in practice, the system may comprise a plurality of (e/g)NodeBs, the device may have an access to a plurality of radio cells and the system may comprise also other apparatuses, such as physical layer relay nodes or other network elements, etc. At least one of the (e/g)NodeBs or may be a Home(e/g)nodeB. Additionally, in a geographical area of a radio communication system a plurality of different kinds of radio cells as well as a plurality of radio cells may be provided. Radio cells may be macro cells (or umbrella cells) which are large cells, usually having a diameter of up to tens of kilometers, or smaller cells such as micro-, femto- or picocells. The (e/g)NodeBs of Figure 5 may provide any kind of these cells. A cellular radio system may be implemented as a multilayer network including several kinds of cells. Typically, in multilayer networks, one access node provides one kind of a cell or cells, and thus a plurality of (e/g)NodeBs are required to provide such a network structure.

For fulfilling the need for improving the deployment and performance of communication systems, the concept of "plug-and-play" (e/g)NodeBs has been introduced. Typically, a network which is able to use "plug-and-play" (e/g)Node Bs, includes, in addition to Home (e/g)NodeBs (H(e/g)nodeBs), a home node B gateway, or HNB-GW (not shown in Figure 5). A HNB Gateway (HNB-GW), which is typically installed within an operator's network may aggregate traffic from a large number of HNBs back to a core network.

## Claims

1. An apparatus for an encoder, the apparatus comprising means for:
receiving (1101), in a first format, a first plurality of values respectively representing first values of performance metrics;
signalling (1102) the first plurality of values to a network apparatus using the first format;
receiving (1103), in the first format, a second plurality of values respectively representing second values of the performance metrics;
and **characterized by** comprising:
determining (1104) whether at least a predetermined number of the second plurality of values are different to the first plurality of values; and
when it is determined that at least the predetermined number of the second plurality of values are different, signalling (1105) the second plurality of values to the network apparatus using the first format; and
when it is determined that less than the predetermined number of the second plurality of values are different, signalling (1106) the second plurality of values to the network apparatus using a second format.

2. An apparatus as claimed in claim 1, wherein when it is determined that the second format is to be used for signalling, the second format comprises, for at least one of the second values, an indication indicating that said second value is identical to a corresponding one of the first values.

3. An apparatus as claimed in claim 2, wherein said indication indicating that said second value is identical to a corresponding one of the first values comprises a flag indicating that the second value is unchanged.

4. An apparatus as claimed in any preceding claim, wherein when it is determined that the second format is to be used for signalling, the second format comprises, for at least one of the second values, an indication that the at least one of the second values is represented in the second format as a difference between the at least one of the second values and a corresponding one of the first values.

5. An apparatus as claimed in any preceding claim, wherein when it is determined that the second format is to be used for signalling, the second format comprises, for at least one of the second values, the at least one second value.

6. An apparatus as claimed in any preceding claim, comprising means for:
determining whether, for at least one of the second values, the second value differs from a corresponding first value by at least a threshold; and
when it is determined that the at least one second value differs from its corresponding first value by at least the threshold, causing the second value to be represented in the second format in an absolute form; and
when it is determined that the at least one second value differs from its corresponding first value by less than the threshold, causing the second value to be represented in the second format as a difference between the second value and the corresponding first value.

7. An apparatus as claimed in any preceding claim, wherein when it is determined that the second format is to be used for signalling, the second format comprises an indication that at least one of the second values is represented therein as a difference between the at least one of the second values and a corresponding one of the first values.

8. An apparatus as claimed in any preceding claim, comprising means for:
locally storing the first plurality of values; and
subsequently overwriting at least one of the first plurality of values using a corresponding one of the second plurality of values when it is determined that said corresponding one of the second plurality of values is to be used as a reference value for signalling at least one value of a third plurality of values that respectively representing third values of the performance metrics as a difference between said at least one value of the third plurality and the reference value.

9. An apparatus as claimed in claim 8, comprising means for:
receiving, in the first format, the third plurality of values;
determining whether at least the predetermined number of the third plurality of values are different to the second plurality of values; and
when it is determined that at least the predetermined number of the third plurality of values are different, signalling the third plurality of values to the network apparatus using the first format; and
when it is determined that less than the predetermined number of the third plurality of values are different, signalling the third plurality of values to the network apparatus using the second format.

10. A method for an apparatus for an encoder, the method comprising:
receiving (1101), in a first format, a first plurality of values respectively representing first values of performance metrics;
signalling (1102) the first plurality of values to a network apparatus using the first format;
receiving (1103), in the first format, a second plurality of values respectively representing second values of the performance metrics;
and **characterized by** comprising:
determining (1104) whether at least a predetermined number of the second plurality of values are different to the first plurality of values; and
when it is determined that at least the predetermined number of the second plurality of values are different, signalling (1105) the second plurality of values to the network apparatus using the first format; and
when it is determined that less than the predetermined number of the second plurality of values are different, signalling (1106) the second plurality of values to the network apparatus using a second format.

## Patentansprüche

1. Vorrichtung für einen Encoder, wobei die Vorrichtung Mittel umfasst zum:
Empfangen (1101), in einem ersten Format, einer ersten Vielzahl von Werten, die jeweils erste Werte von Leistungsmetriken repräsentieren;
Signalisieren (1102) der ersten Vielzahl von Werten an eine Netzvorrichtung unter Verwendung des ersten Formats;
Empfangen (1103), in dem ersten Format, einer zweiten Vielzahl von Werten, die jeweils zweite Werte der Leistungsmetriken repräsentieren;
und **dadurch gekennzeichnet, dass** sie Mittel umfasst zum:
Bestimmen (1104), ob mindestens eine vorbestimmte Anzahl der Werte der zweiten Vielzahl sich von den Werten der ersten Vielzahl unterscheidet; und
wenn bestimmt wird, dass mindestens die vorbestimmte Anzahl der Werte der zweiten Vielzahl unterschiedlich ist, Signalisieren (1105) der zweiten Vielzahl von Werten an die Netzvorrichtung unter Verwendung des ersten Formats; und
wenn bestimmt wird, dass weniger als die vorbestimmte Anzahl der Werte der zweiten Vielzahl unterschiedlich ist, Signalisieren (1106) der zweiten Vielzahl von Werten an die Netzvorrichtung unter Verwendung eines zweiten Formats.

2. Vorrichtung nach Anspruch 1, wobei wenn bestimmt wird, dass das zweite Format für die Signalisierung zu verwenden ist, das zweite Format für mindestens einen der zweiten Werte eine Angabe umfasst, die angibt, dass der besagte zweite Wert mit einem entsprechenden der ersten Werte identisch ist.

3. Vorrichtung nach Anspruch 2, wobei die besagte Angabe, die angibt, dass der besagte zweite Wert mit einem entsprechenden der ersten Werte identisch ist, ein Flag umfasst, das angibt, dass der zweite Wert unverändert ist.

4. Vorrichtung nach einem der vorhergehenden Ansprüche, wobei wenn bestimmt wird, dass das zweite Format für die Signalisierung zu verwenden ist, das zweite Format für mindestens einen der zweiten Werte eine Angabe umfasst, dass der besagte mindestens eine der zweiten Werte im zweiten Format als Differenz zwischen dem besagten mindestens einen der zweiten Werte und einem entsprechenden der ersten Werte dargestellt ist.

5. Vorrichtung nach einem der vorhergehenden Ansprüche, wobei wenn bestimmt wird, dass das zweite Format für die Signalisierung zu verwenden ist, das zweite Format für mindestens einen der zweiten Werte den besagten mindestens einen zweiten Wert umfasst.

6. Vorrichtung nach einem der vorhergehenden Ansprüche, umfassend Mittel zum:
Bestimmen, ob für mindestens einen der zweiten Werte der zweite Wert von einem entsprechenden ersten Wert um mindestens einen Schwellenwert abweicht; und
wenn bestimmt wird, dass der besagte mindestens eine zweite Wert von seinem entsprechenden ersten Wert um mindestens den Schwellenwert abweicht, Bewirken, dass der zweite Wert im zweiten Format in absoluter Form dargestellt wird; und
wenn bestimmt wird, dass der besagte mindestens eine zweite Wert von seinem entsprechenden ersten Wert um weniger als den Schwellenwert abweicht, Bewirken, dass der zweite Wert im zweiten Format als Differenz zwischen dem zweiten Wert und dem entsprechenden ersten Wert dargestellt wird.

7. Vorrichtung nach einem der vorhergehenden Ansprüche, wobei wenn bestimmt wird, dass das zweite Format für die Signalisierung zu verwenden ist, das zweite Format eine Angabe umfasst, dass mindestens einer der zweiten Werte darin als Differenz zwischen dem besagten mindestens einen der zweiten Werte und einem entsprechenden der ersten Werte dargestellt ist.

8. Vorrichtung nach einem der vorhergehenden Ansprüche, umfassend Mittel zum:
lokalen Speichern der ersten Vielzahl von Werten; und
anschließenden Überschreiben mindestens eines der Werte der ersten Vielzahl unter Verwendung eines entsprechenden der Werte der zweiten Vielzahl, wenn bestimmt wird, dass der besagte entsprechende Wert der zweiten Vielzahl als Referenzwert für die Signalisierung mindestens eines Werts einer dritten Vielzahl von Werten zu verwenden ist, die jeweils dritte Werte der Leistungsmetriken als Differenz zwischen dem besagten mindestens einen Wert der dritten Vielzahl und dem Referenzwert repräsentieren.

9. Vorrichtung nach Anspruch 8, umfassend Mittel zum:
Empfangen, in dem ersten Format, der dritten Vielzahl von Werten;
Bestimmen, ob mindestens die vorbestimmte Anzahl der Werte der dritten Vielzahl sich von den Werten der zweiten Vielzahl unterscheidet; und
wenn bestimmt wird, dass mindestens die vorbestimmte Anzahl der Werte der dritten Vielzahl unterschiedlich ist, Signalisieren der dritten Vielzahl von Werten an die Netzvorrichtung unter Verwendung des ersten Formats; und
wenn bestimmt wird, dass weniger als die vorbestimmte Anzahl der Werte der dritten Vielzahl unterschiedlich ist, Signalisieren der dritten Vielzahl von Werten an die Netzvorrichtung unter Verwendung des zweiten Formats.

10. Verfahren für eine Vorrichtung für einen Encoder, wobei das Verfahren umfasst:
Empfangen (1101), in einem ersten Format, einer ersten Vielzahl von Werten, die jeweils erste Werte von Leistungsmetriken repräsentieren;
Signalisieren (1102) der ersten Vielzahl von Werten an eine Netzvorrichtung unter Verwendung des ersten Formats;
Empfangen (1103), in dem ersten Format, einer zweiten Vielzahl von Werten, die jeweils zweite Werte der Leistungsmetriken repräsentieren;
und **dadurch gekennzeichnet, dass** es umfasst:
Bestimmen (1104), ob mindestens eine vorbestimmte Anzahl der Werte der zweiten Vielzahl sich von den Werten der ersten Vielzahl unterscheidet; und
wenn bestimmt wird, dass mindestens die vorbestimmte Anzahl der Werte der zweiten Vielzahl unterschiedlich ist, Signalisieren (1105) der zweiten Vielzahl von Werten an die Netzvorrichtung unter Verwendung des ersten Formats; und
wenn bestimmt wird, dass weniger als die vorbestimmte Anzahl der Werte der zweiten Vielzahl unterschiedlich ist, Signalisieren (1106) der zweiten Vielzahl von Werten an die Netzvorrichtung unter Verwendung eines zweiten Formats.

## Revendications

1. Appareil pour un encodeur, l'appareil comprenant des moyens pour:
recevoir (1101), dans un premier format, une première pluralité de valeurs représentant respectivement des premières valeurs de métriques de performance ;
signaler (1102) la première pluralité de valeurs à un appareil de réseau en utilisant le premier format ;
recevoir (1103), dans le premier format, une deuxième pluralité de valeurs représentant respectivement des deuxièmes valeurs des métriques de performance ;
et **caractérisé en ce qu'**il comprend :
déterminer (1104) si au moins un nombre prédéterminé des valeurs de la deuxième pluralité sont différentes des valeurs de la première pluralité ; et
lorsqu'il est déterminé qu'au moins le nombre prédéterminé des valeurs de la deuxième pluralité sont différentes, signaler (1105) la deuxième pluralité de valeurs à l'appareil de réseau en utilisant le premier format ; et
lorsqu'il est déterminé que moins que le nombre prédéterminé des valeurs de la deuxième pluralité sont différentes, signaler (1106) la deuxième pluralité de valeurs à l'appareil de réseau en utilisant un deuxième format.

2. Appareil selon la revendication 1, dans lequel lorsqu'il est déterminé que le deuxième format doit être utilisé pour le signalement, le deuxième format comprend, pour au moins une des deuxièmes valeurs, une indication indiquant que ladite deuxième valeur est identique à une des premières valeurs correspondante.

3. Appareil selon la revendication 2, dans lequel ladite indication indiquant que ladite deuxième valeur est identique à une des premières valeurs correspondante comprend un drapeau indiquant que la deuxième valeur est inchangée.

4. Appareil selon l'une quelconque des revendications précédentes, dans lequel lorsqu'il est déterminé que le deuxième format doit être utilisé pour le signalement, le deuxième format comprend, pour au moins une des deuxièmes valeurs, une indication selon laquelle ladite au moins une des deuxièmes valeurs est représentée dans le deuxième format sous forme d'une différence entre ladite au moins une des deuxièmes valeurs et une des premières valeurs correspondante.

5. Appareil selon l'une quelconque des revendications précédentes, dans lequel lorsqu'il est déterminé que le deuxième format doit être utilisé pour le signalement, le deuxième format comprend, pour au moins une des deuxièmes valeurs, ladite au moins une deuxième valeur.

6. Appareil selon l'une quelconque des revendications précédentes, comprenant des moyens pour :
déterminer si, pour au moins une des deuxièmes valeurs, la deuxième valeur diffère d'une première valeur correspondante d'au moins un seuil ; et
lorsqu'il est déterminé que ladite au moins une deuxième valeur diffère de sa première valeur correspondante d'au moins ledit seuil, amener la deuxième valeur à être représentée dans le deuxième format sous forme absolue ; et
lorsqu'il est déterminé que ladite au moins une deuxième valeur diffère de sa première valeur correspondante de moins dudit seuil, amener la deuxième valeur à être représentée dans le deuxième format sous forme d'une différence entre la deuxième valeur et la première valeur correspondante.

7. Appareil selon l'une quelconque des revendications précédentes, dans lequel lorsqu'il est déterminé que le deuxième format doit être utilisé pour le signalement, le deuxième format comprend une indication selon laquelle au moins une des deuxièmes valeurs y est représentée sous forme d'une différence entre ladite au moins une des deuxièmes valeurs et une des premières valeurs correspondante.

8. Appareil selon l'une quelconque des revendications précédentes, comprenant des moyens pour :
stocker localement la première pluralité de valeurs ; et
écraser ensuite au moins une des valeurs de la première pluralité en utilisant une des valeurs de la deuxième pluralité correspondante lorsqu'il est déterminé que ladite valeur correspondante de la deuxième pluralité doit être utilisée en tant que valeur de référence pour le signalement d'au moins une valeur d'une troisième pluralité de valeurs représentant respectivement des troisièmes valeurs des métriques de performance sous forme d'une différence entre ladite au moins une valeur de la troisième pluralité et la valeur de référence.

9. Appareil selon la revendication 8, comprenant des moyens pour :
recevoir, dans le premier format, la troisième pluralité de valeurs ;
déterminer si au moins le nombre prédéterminé des valeurs de la troisième pluralité sont différentes des valeurs de la deuxième pluralité ; et
lorsqu'il est déterminé qu'au moins le nombre prédéterminé des valeurs de la troisième pluralité sont différentes, signaler la troisième pluralité de valeurs à l'appareil de réseau en utilisant le premier format ; et
lorsqu'il est déterminé que moins que le nombre prédéterminé des valeurs de la troisième pluralité sont différentes, signaler la troisième pluralité de valeurs à l'appareil de réseau en utilisant le deuxième format.

10. Procédé pour un appareil pour un encodeur, le procédé comprenant :
recevoir (1101), dans un premier format, une première pluralité de valeurs représentant respectivement des premières valeurs de métriques de performance ;
signaler (1102) la première pluralité de valeurs à un appareil de réseau en utilisant le premier format ;
recevoir (1103), dans le premier format, une deuxième pluralité de valeurs représentant respectivement des deuxièmes valeurs des métriques de performance ;
et **caractérisé en ce qu'**il comprend :
déterminer (1104) si au moins un nombre prédéterminé des valeurs de la deuxième pluralité sont différentes des valeurs de la première pluralité ; et
lorsqu'il est déterminé qu'au moins le nombre prédéterminé des valeurs de la deuxième pluralité sont différentes, signaler (1105) la deuxième pluralité de valeurs à l'appareil de réseau en utilisant le premier format ; et
lorsqu'il est déterminé que moins que le nombre prédéterminé des valeurs de la deuxième pluralité sont différentes, signaler (1106) la deuxième pluralité de valeurs à l'appareil de réseau en utilisant un deuxième format.
